(19) Europäisches Patentamt
European Patent Office
Office européen des brevets

(11) **EP 1 499 043 A1**

(12) **EUROPEAN PATENT APPLICATION**

(43) Date of publication:
**19.01.2005 Bulletin 2005/03**

(51) Int Cl.[7]: **H04B 10/158**, H04J 14/00

(21) Application number: **03360085.9**

(22) Date of filing: **16.07.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **ALCATEL**
**75008 Paris (FR)**

(72) Inventor: **Weis, Bernd X.**
**70825 Korntal (DE)**

(74) Representative: **Kohler Schmid Möbus**
**Patentanwälte**
**Ruppmannstrasse 27**
**70565 Stuttgart (DE)**

(54) **Receiving method and receiver for optical CDMA signals**

(57) The invention relates to a method and a receiver for receiving optical signals of a client in an optical communication network for transmitting multiplexed optical signals potentially containing the optical signals of the client, wherein the optical signals of the client are coded with a client code function. The method is comprising the step of deriving the signals of the client if contained in the transmitted multiplexed optical signals by subtracting the intensity of a compensation signal from the intensity of a signal which contains the transmitted multiplexed optical signals, wherein the compensation signal is the transmitted multiplexed optical signals themselves and the signal which contains the transmitted multiplexed optical signals is archived by optically combining the transmitted multiplexed optical signals with an optical client code function signal, wherein additionally the intensity of the optical client code function signal is subtracted from the intensity of the combined signal.

Fig. 2

**Description**

This invention relates to a receiving method and a receiver for optical signals in an optical CDMA (Code Division Multiple Access) communications network for transmitting coded, multiplexed optical signals. The receiver includes means for detecting the optical signals to be received and processing means to extract optical signals of a client, which are coded with a client code function out of the transmitted multiplexed optical signals. The receiving method uses characteristics of the wave character of the signals to extract the client's signals.

Such a method and a receiver which uses the method to receive optical signals is known from the European patent application EP 98 440 116, wherein the signal of the client is derived from the transmitted multiplexed optical signals by subtracting the intensity of a compensation signal from the intensity of the transmitted multiplexed optical signals. The compensation signal is separated out of the transmitted multiplexed optical signals by using a periodic wavelength filter, particularly a Fabry-Perot filter, which reflects optical signals not to be received within the transmitted multiplexed optical signals, for example noise present in the transmitted multiplexed optical signals. In a theoretical view, the filter applies a function to the multiplexed optical signals.

A disadvantage of this method and receiver is that the Fabry-Perot filter has to be adjusted to the wavelength of any client signal to be received. Another problem is that in case there are many different client signals with different wavelengths within the transmitted multiplexed optical signals, the intensity of the compensation signal may be much higher than the intensity of the wanted client signal. Thus, there may occur an accuracy problem if the intensities are subtracted.

CMDA systems deploy orthogonal functions to differentiate between signals of different sources (clients). Typically, for each client k, who needs to be differentiated, a client code function $g_k$ is defined in such a way that the set of functions $g_k$ of the different clients are mutually orthogonal, e.g. the wavelengths of the client signals are not equal, i.e.

$$(g_i|g_k) = 0 \text{ for } i \neq k.$$

The client's signals are coded with the client's code function $g_i$, that means, e.g. the client i uses an optical signal with a frequency according to this function. For the sake of better understanding the following preliminaries are introduced.

The scalar product (f|g) between two complex valued functions f and g is defined as

$$(f|g) = \int_{-\infty}^{+\infty} w(t)f(t)g^*(t)dt$$

where $w(t) \geq 0$ is some weight function and g* is the conjugated complex value of g.

The two functions f and g are said to be orthogonal if

$$\int_{-\infty}^{+\infty} w(t)f(t)g^*(t)dt = 0.$$

Light can in a first approximation be analysed using wave functions. Given two wave functions f and g,

$$f = F(\omega) \, e^{j(\omega t - kz)} = |F(w)|e^{j\alpha} \, e^{j(\omega t - kz)}$$

$$g = G(\omega) \, e^{j(\omega t - kz)} \, e^{j\gamma} = |G(\omega)|e^{j\beta} \, e^{j(\omega t - kz)} \, e^{j\gamma},$$

wherein $\alpha$ is the phase of the function f and $\beta$ is the phase of the function g. A phase $\gamma$ of function g is for the sake of generality introduced corresponding to a delay device at the receiving side.

The intensity of a wave function f is given by ff*, and of g by gg*. The intensity of superposed signals f and g is:

$$(f+g) \ (f+g)^* = ff^* + gg^* + fg^* + f^*g = ff^* + gg^* +2 \ Re\{fg^*\}$$

In a CMDA system at the receiving side end, the same client code function $g_k$ must be applied again to the multiplexed signals to extract the actual client signal out of the transmitted multiplexed optical signal f, which is a sum of signals from different clients:

$$f = \sum_{clients} g_k$$

In photonic systems this is difficult to achieve.

It is therefore an object of the invention to provide a receiving method and a receiver for optical signals which overcome the problems associated with the related art, in particular which receiver is easy to be integrated into ASIC (Application Specific Integrated Circuit) technology.

According to the invention, this object is attained by a method for receiving optical signals of a client i in an optical communication network for transmitting multiplexed optical signals f potentially containing the optical signals of the client, wherein the optical signals of the client are coded with a client code function $g_i$ according to claim 1. The inventive method is comprising the step of deriving the signals of the client from the transmitted multiplexed optical signal by subtracting the intensity of a second signal from the intensity of a first signal which contains the transmitted multiplexed optical signal f. The method is characterised in that the second signal is the transmitted multiplexed optical signal f itself and the first signal which contains the transmitted multiplexed optical signal is achieved by optically combining the transmitted multiplexed optical signal f with an optical client code function signal $g_i$. Thus, the first signal is a superposition of the said signals $f + g_i$. The client code function signal $g_i$ is provided at the receiver side of the optical communication network corresponding to the channel to be demultiplexed. Additionally, according to the inventive method the intensity of the optical client code function signal $g_i$ is subtracted from the intensity of the first signal. The intensities of the three signals are measured, for example by converting the optical signals into electric current using photo-transistors. The result of the subtractions is a value for the intensity of the signals of the client. It results in

$$2 \ Re\{fg^*\},$$

which is a value for the intensity of the signals of the client i to be received, because of the properties of the scalar product of orthogonal functions mentioned above.

The inventive method allows to analyse the orthogonality of functions using a simple electronic circuit, thus the circuit is easy to be integrated into ASIC technology. The intensities to be subtracted are all in the same magnitude, so there cannot arise an accuracy problem.

Further advantageous features of the invention are defined in the depending claims.

In a preferred embodiment of the inventive method the remainder signal of the subtractions is integrated. The integration is made over a specific time interval. The integration may be made to achieve a digital value out of the analogue remainder signal of the subtractions. Preferably after the integration an orthogonality check, whether the transmitted multiplexed optical signals f contain an optical signal of the client, coded with the client code function $g_i$, is introduced by comparing the result of the integration to at least one threshold. If the optical signals of the client are coded digitally the integration is to be done over a time interval $\Delta T$ corresponding to the bit length in the signals of the client. Thus, the results of orthogonality checks, which are introduced in every time interval $\Delta T$, is the bit string of the signals sent by the client who codes his signal with the client code function $g_i$. The threshold is to be chosen in a way that the result of the integration is lying above the threshold if the value of the bit transmitted is one and the result of the integration is lying under the threshold if the value of the bit transmitted is zero. This preferred embodiment of the invention is advantageous for receiving digital coded signals or to convert analogue signals into digital signals.

In another preferred embodiment of the inventive method a phase shift is introduced to the optical client code function signal $g_i$ before combining it with the transmitted multiplexed optical signal f, preferably in such a way that the phase $\beta+\gamma$ of the phase shifted optical client code function signal subtracted from the phase $\alpha$ of the transmitted multiplexed optical signal results in $n^*\pi$, wherein n is a natural number. The phase shifting preferably is to be done if an integration over time of the result of the subtraction is introduced. The integral over the time period $\Delta T$ of the result of the subtractions in the inventive method can be expressed as

$$\int_{-T}^{+T} f(t)g^*(t)dt = [\cos(\alpha-\beta-\gamma) + j\ \sin(\alpha-\beta-\gamma)] \int_{-T}^{+T} |F(\omega)||G(\omega)|dt$$

If $\alpha-\beta-\gamma = n*\Pi$ then the real part of the integral is maximised, so, for example an orthogonality check can be made with a low failure quota, because this part is responsible for real physical quantities to be measured in a physical device, which is prepared to execute the inventive method, e.g. an electrical circuit integrated into an ASIC.

In another preferred embodiment the transmitted multiplexed optical signal f and/or the optical client code function signal $g_i$ is amplified by factors or the intensities of these signals are multiplied by factors before subtracting them from the intensity of the first signal. Preferably, this is done in a way that the absolute values of the factors are equal to absolute values of amplifying factors with which the signals have been amplified while they were being combined to achieve the first signal $f + g_i$. In a physical device prepared to combine the two signals, normally some amounts of the intensities of the signals are separated out of the signals. Thus the signals are amplified with factors less then one. The scalar product of the combined signal can be expressed as

$$(a_{12}\ f+ a_{21}\ g)\ (a_{12}\ f+ a_{21}\ g)^* = a_{12}^2\ ff^* + a_{21}^2\ gg^* +2\ a_{12}\ a_{21}\ Re\{fg^*\},$$

with the amplifying factors $a_{12}$ and $a_{21}$. If the signal f is amplified by a factor $a_{11}$ and the signal g is amplified by a factor $a_{22}$ then the subtractions according to the invention result in

$$2\ a_{12}\ a_{21}\ Re\{fg^*\},$$

if $a_{12}^2 = a_{11}^2$ and $a_{21}^2 = a_{22}^2$.

This embodiment of the inventive method is advantageous to compensate weakening effects occurring to the signals while combining them.

According to the invention, the objection concerning a receiver is attained by a receiver device for receiving optical signals of a client in an optical communication network for transmitting multiplexed optical signals f potentially containing the optical signals of the client, wherein the optical signals of the client are coded with a client code function $g_i$, as set forth in claim 5. The receiver device is comprising first detecting means, being designed to put out the intensity of a first optical signal which contains the transmitted multiplexed optical signal f, second detecting means, being designed to put out the intensity of a second optical signal and subtraction means being designed to subtract the output signal of the second detecting means from the output signal of the first detecting means. The receiver device is characterised in that combining means are provided to combine the transmitted multiplexed optical signal f with the optical client code function signal $g_i$ to form the first optical signal $f + g_i$, to be detected by the first detection means. Furthermore, the second detection means are configured to detect the transmitted multiplexed optical signal f, thus the second signal is the transmitted multiplexed optical signal f itself and

third detecting means, being designed to put out the intensity of the optical client code function signal $g_i$, are provided. Additionally, the subtraction means are designed to subtract the output signal of the third detecting means from the output signal of the first detecting means. An electronic circuit to obtain the intensities of the three signals and which is configured to carry out the subtractions may only comprise an operational amplifier and three photo-transistors.

The simplicity of the circuits and the circuit elements makes this easy to integrate on an ASIC.

In a preferred embodiment of the invention the subtraction means are comprising an electrical subtraction circuit having at its inputs the outputs of the first, the second and the third detecting means. Alternatively, the subtraction means are comprising a computer system loaded with a computer program with software code sections by which the subtractions are carried out. Furthermore, any step of the preferred embodiments of the inventive method, especially steps to be made after the intensities of the signals have been derived, may be carried out by a computer system loaded with a computer program with software code sections by which the step is carried out.

In another preferred embodiment of the invention an integrator device, preferably a capacitor for integrating an output signal from the subtraction means to obtain the client signal, is provided. This embodiment is advantageous to implement a receiver to obtain digitalised data.

In a preferred embodiment of the invention containing an integrator device, orthogonality checking means are provided, configured to compare a result of the integrator device to at least one threshold and to decide whether the transmitted multiplexed optical signals f contain an optical signal of the client, coded with the client code function $g_i$, depending on this comparison. This embodiment is advantageous to implement a receiver to obtain digital data, if the transmitted signals of the client are consisting of digital data.

It is preferred that the detecting means of the receiver are comprising photo-transistors.

Preferably, the combining means are comprising at least a photonic splitter and a photonic combiner. At least the transmitted multiplexed optical signals f have to be split to obtain a first branch to be combined with the optical client code function and second branch to be detected from the second detecting means to put out its intensity. Preferably, there is a second optical splitter to split the optical client code function before it is combined optically with the first branch of the transmitted multiplexed optical signals f. It is also possible to make available two identical signals of the optical client code function, because the optical client code function signal is made available at the receiving side of the optical communication network anyway.

In another preferred embodiment of the invention a phase delaying device is provided within the combining means which is designed to introduce a phase shift to the optical client code function signal $g_i$ before it is combined with the transmitted multiplexed optical signal f, preferably in a way that the phase $\beta+\gamma$ of the phase shifted optical client code function signal subtracted from the phase $\alpha$ of the transmitted multiplexed optical signal results in $n*\pi$, wherein n is a natural number.

Preferably, in the inventive receiver the combining means are designed to amplify the transmitted multiplexed optical signal f and/or the optical client code function signal $g_i$ optically by factors, preferably wherein the absolute values of the factors are equal to absolute values of amplifying factors with which the signals are amplified by the combining means while they are being combined to achieve the first signal f + g;.

The different features of the preferred embodiments of the invention may be used in combination together with the invention as set forth in the independent claims or just each single preferred embodiment together with the invention as set forth in the independent claims.

The embodiments of the invention will now be described with reference to the accompanying drawings.

In fig. 1 a receiver for optical CDMA signals and its detector configuration according to the invention is shown schematically.

In fig. 2 a photo detector circuit according to the invention is shown schematically.

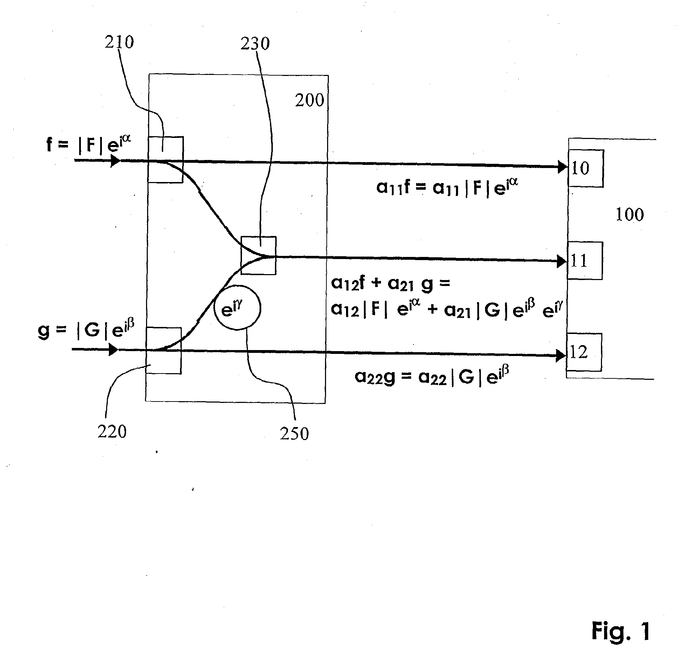

The receiver for optical CDMA signals as shown in figure 1 comprises optical combining means 200 for combining the multiplexed optical signal f with an optical client code function signal $g_i$ corresponding to the channel to be demultiplexed; an electrical photo detector subtractor circuit 100 (subtraction means) having at its inputs the combined signal f + $g_i$, the multiplexed signal and the client code function signal and being designed to subtract the latter two from the former signal. Hence, this subtraction means are designed to build the difference value between the intensities of the multiplexed signals f, the client code function signal $g_i$ and the combined signal f + $g_i$. Furthermore, the receiver may comprise an, integrator device, preferably a capacitor, for integrating the remainder signal from the subtraction to obtain the demultiplexed user signal (Data).

The mathematic evaluation as described shows a way to demultiplex CMDA signals f. The receiver circuit 100 requires three input signals: the multiplexed signal f, the client code function $g_i$ and a combined signal (f + $g_i$). The latter can be obtained by optical combining means 200 using two passive optical splitters 210, 220 and a combiner 230 as it is shown in figure 1. The receiver circuit 100 subtracts the two other inputs from the combined signal using three photo-transistors 10, 11, 12 and integrates the result using a capacitor C. The voltage at the capacitor is the demultiplexed client signal.

Combining means comprising photonic splitters 210, 220 and a photonic combiner 230 for the signals have the characteristics as shown in figure 1. The resulting signals are

$$(a_{12}\, f + a_{21}\, g)\, (a_{12}f + a_{21}\, g)^* = a_{12}^2\, ff^* + a_{21}^2\, gg^* + a_{12}\, a_{21}\, fg^* + a_{12}\, a_{21}\, f^*g =$$

$$a_{12}^2\, ff^* + a_{21}^2\, gg^* + 2\, a_{12}\, a_{21}\, \mathrm{Re}\{fg^*\} = |A'(\omega)|^2$$

$$a_{11}^2\, ff^* = |F'(\omega)|^2,\ a_{22}^2\, gg^* = |G'(\omega)|^2$$

$$|A'(\omega)|^2 - |F'(\omega)|^2 - |G'(\omega)|^2 = (a_{12}^2 - a_{11}^2)\, ff^* + (a_{21}^2 - a_{22}^2)\, gg^* + 2\, a_{12}\, a_{21}\, \mathrm{Re}\{fg^*\}$$

For $a_{12}^2 = a_{11}^2$ and $a_{21}^2 = a_{22}^2$ then

$$|A'(\omega)|^2 - |F'(\omega)|^2 - |G'(\omega)|^2 = 2\, a_{12}\, a_{21}\, \text{Re}\{fg^*\}$$

For technical purposes, especially for receiving optical signals of a client, which are coded digitally, it is sufficient to check orthogonality of a period $\Delta T$ between $- T$ and $+T$ which basically corresponds to the bit length, i.e.

$$(f|g) = \int_{-\infty}^{+\infty} w(t)f(t)g^*(t)dt = \int_{-T}^{+T} f(t)g^*(t)dt$$

with $w(t) \equiv 1$ for $-T \le t \le +T$ and $w(t) \equiv 0$ otherwise.
Define

$$(f+g)\,(f+g)^* = |A(\omega)|^2$$

$$ff^* = |F(\omega)|^2,\ gg^* = |G(\omega)|^2$$

Then

$$\text{Re}\{fg^*\} = |F(\omega)||G(\omega)|\cos(\alpha-\beta-\gamma) = \frac{|A(\omega)|^2 - |F(\omega)|^2 - |G(\omega)|^2}{2}$$

$$\int_{-T}^{+T} f(t)g^*(t)dt = \int_{-T}^{+T} |F(\omega)||G(\omega)|[\cos(\alpha-\beta-\gamma) + j\,\sin(\alpha-\beta-\gamma)]dt =$$

$$[\cos(\alpha-\beta-\gamma) + j\,\sin(\alpha-\beta-\gamma)] \int_{-T}^{+T} |F(\omega)||G(\omega)|dt$$

Note that $\gamma$ can be adjusted to maximise $\cos(\alpha-\beta-\gamma)$, i.e. $\cos(\alpha-\beta-\gamma) = 1$ and $\sin(\alpha-\beta-\gamma) = 0$, i.e.

$$\gamma = \alpha-\beta - n * 2\pi,\ -\infty < n < +\infty$$

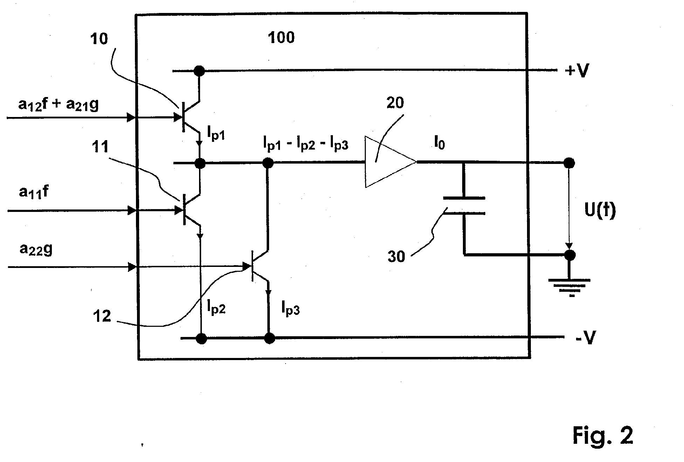

The parameter n can be chosen such that $\gamma \le 0$, i.e. introducing this phase $\gamma$ can be done by a phase delay device 250.
A photo detector circuit 100 according to the invention is shown schematically in fig 2. The photo detector circuit consist of a first optical-to-electrical transducer 10 for converting an optical signal $a_{12}f + a_{21}g$ which contains the transmitted optical signal f into first electrical signals $I_{p1}$, a second optical-to-electrical transducer 11 for converting a second optical signal $a_{11}f$ into second electrical signals $I_{p2}$, and additionally a third optical-to-electrical transducer 12 for converting the optical client code function $a_{22}g$ into third electrical signals $I_{p3}$. Furthermore, an amplifier 20 for subtracting the second and the third from the first electrical signal is provided. The optical-to-electrical transducers 10, 11, 12 may be implemented by photodiodes, for example. The differential amplifier 20 may also be an operation amplifier with positive and negative input. The corresponding circuit is shown in figure 2.

The characteristic of a photo detector is given by

$$I_p = R * P_{in},$$

where $I_p$ is the photo current, $P_{in}$ is the received light intensity and R is the responsivity of the device. Thus, the electrical signals are proportional to the intensities of the optical signals.

For the three photo detectors 10, 11, 12 the currents are given by

$$I_{p1} = R * (a_{12}^2 ff^* + a_{21}^2 gg^* + 2 a_{12} a_{21} Re\{fg^*\}),$$

$$I_{p2} = R * a_{11}^2 ff^*,$$

$$I_{p3} = R * a_{22}^2 gg^*,$$

when the photo detectors are fed with the corresponding signals. Then

$$I_{p1} - I_{p2} - I_{p3} = R * (a_{12}^2 ff^* + a_{21}^2 gg^* + 2 a_{12} a_{21} Re\{fg^*\}) - R * a_{11}^2 ff^* - R * a_{22}^2 gg^*,$$

$$I_{p1} - I_{p2} - I_{p3} = R * (a_{12}^2 ff^* + a_{21}^2 gg^* + 2 a_{12} a_{21} Re\{fg^*\} - a_{11}^2 ff^* - a_{22}^2 gg^*),$$

$$I_{p1} - I_{p2} - I_{p3} = R * ((a_{12}^2 - a_{11}^2) ff^* + (a_{12}^2 - a_{22}^2) gg^* + 2 a_{12} a_{21} Re\{fg^*\}),$$

Again for $a_{12}^2 = a_{11}^2$ and $a_{21}^2 = a_{22}^2$

$$I_0 = I_{p1} - I_{p2} - I_{p3} = 2 a_{12} a_{21} Re\{fg^*\}$$

For checking the orthogonality the integral of the resulting current $I_o$ is needed. The integration is easily done through a condenser 30, i.e.

$$\int_{-T}^{+t} 2 Re \{f(\tau)g^*(\tau)\}d\tau = \int_{-T}^{+t} (I_{p1}(\tau) - I_{p2}(\tau) - I_{p3}(\tau))d\tau = \int_{-T}^{+t} I_o(\tau) \, d\tau = C_{con} U(t),$$

with $C_{con}$ the capacity of the condensor.

Hence, eventually the voltage U(+T) is the result of this integration. Thus, this circuit provides - together with some defined thresholds Threshold1 and Threshold2 - the decision means to decide whether two functions f and g are orthogonal, i.e. if

$$U(+T) = \begin{cases} \geq \text{Threshold1,} \\ \text{then the signal has been coded with g, i.e. } f = g \\ \text{undecided} \\ \leq \text{Threshold2,} \\ \text{then the signal has not been coded with g, i.e. } f \perp g \end{cases}$$

## Claims

1. A method for receiving optical signals of a client in an optical communication network for transmitting multiplexed optical signals (f) potentially containing the optical signals of the client, wherein the optical signals of the client are coded with a client code function ($g_i$), comprising the step of

   - deriving the signals of the client from the transmitted multiplexed optical signal by subtracting the intensity of a second signal from the intensity of a first signal which contains the transmitted multiplexed optical signal (f),

   **characterised in**
   **that** the second signal is the transmitted multiplexed optical signal itself and that the first signal which contains the transmitted multiplexed optical signal is achieved by optically combining the transmitted multiplexed optical signal with an optical client code function signal ($f + g_i$), wherein additionally the intensity of the optical client code function signal is subtracted from the intensity of the first signal.

2. The method according to claim 1,
   **characterised in that** the remainder signal of the subtractions is integrated, preferably that after the integration an orthogonality check, whether the transmitted multiplexed optical signals (f) contain an optical signal of the client, coded with the client code function ($g_i$), is introduced by comparing the result of the integration to at least one threshold.

3. The method according to claim 1,
   **characterised in that** a phase shift is introduced to the optical client code function signal ($g_i$) before combining it with the transmitted multiplexed optical signal (f), preferably in such a way that the phase ($\beta + \gamma$) of the phase shifted optical client code function signal subtracted from the phase ($\alpha$) of the transmitted multiplexed optical signal results in $n \ast \pi$, wherein n is a natural number.

4. The method according to claim 1,
   **characterised in that** the transmitted multiplexed optical signal (f) and/or the optical client code function signal ($g_i$) is amplified by factors or the intensities of these signals are multiplied by factors before subtracting them from the intensity of the first signal, preferably wherein the absolute values of the factors are equal to absolute values of amplifying factors with which the signals have been amplified while they were being combined to achieve the first signal ($f + g_i$).

5. A receiver device for receiving optical signals of a client in an optical communication network for transmitting multiplexed optical signals (f) potentially containing the optical signals of the client, wherein the optical signals of the client are coded with a client code function ($g_i$), comprising

   - first detecting means, being designed to put out the intensity of a first optical signal which contains the transmitted multiplexed optical signal (f),
   - second detecting means, being designed to put out the intensity of a second optical signal and
   - subtraction means being designed to subtract the output signal of the second detecting means from the output signal of the first detecting means,

   **characterised in**
   **that** combining means are provided to combine the transmitted multiplexed optical signal (f) with the optical client

code function signal ($g_i$) to form the first optical signal ($f + g_i$), to be detected by the first detection means and the second detection means are configured to detect the transmitted multiplexed optical signal ($f$) and third detecting means, being designed to put out the intensity of the optical client code function signal ($g_i$), are provided, wherein the subtraction means additionally is designed to subtract the output signal of the third detecting means from the output signal of the first detecting means.

6. The receiver according to claim 5,
   **characterised in that** the subtraction means are comprising an electrical subtraction circuit having at its inputs the outputs of the first, the second and the third detecting means or
   that the subtraction means are comprising a computer system loaded with a computer program with software code sections by which the subtractions are carried out.

7. The receiver according to claim 5,
   **characterised in that** an integrator device, preferably a capacitor for integrating an output signal from the subtraction means to obtain the client signal, is provided.

8. The receiver according to claim 7,
   **characterised in that** orthogonality checking means are provided, configured to compare a result of the integrator device to at least one threshold and to decide whether the transmitted multiplexed optical signals ($f$) contain an optical signal of the client, coded with the client code function ($g_i$), depending on this comparison.

9. The receiver according to claim 5,
   **characterised in that** the detecting means are comprising photo-transistors.

10. The receiver according to claim 5,
    **characterised in that** the combining means are comprising at least one photonic splitter and a photonic combiner.

11. The receiver according to claim 5,
    **characterised in that** a phase delaying device is provided within the combining means which is designed to introduce a phase shift to the optical client code function signal ($g_i$) before it is combined with the transmitted multiplexed optical signal ($f$), preferably in a way that the phase ($\beta+\gamma$) of the phase shifted optical client code function signal subtracted from the phase ($\alpha$) of the transmitted multiplexed optical signal results in $n^*\pi$, wherein $n$ is a natural number and/or the combining means are designed to amplify the transmitted multiplexed optical signal ($f$) and/or the optical client code function signal ($g_i$) optically by factors, preferably wherein the absolute values of the factors are equal to absolute values of amplifying factors with which the signals are amplified by the combining means while they are being combined to achieve the first signal ($f + g_i$).

Fig. 1

Fig. 2

European Patent
Office

**EUROPEAN SEARCH REPORT**

Application Number

EP 03 36 0085

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | CA 2 298 340 A (UNIV STRATHCLYDE) 9 August 2001 (2001-08-09) <br> * abstract * <br> * page 2, line 26 - page 3, line 16 * <br> * page 4, line 26 - page 5, line 26 * <br> * page 6, line 22 - page 7, line 13 * <br> * page 8, line 4 - line 25 * <br> * page 10, line 6 - page 11, line 13 * <br> --- | 1,2,5, 7-10 | H04B10/158 H04J14/00 |
| A | WO 00 76102 A (CODESTREAM TECHNOLOGIES CORP) 14 December 2000 (2000-12-14) <br> * abstract * <br> * page 9, line 17 - line 34 * <br> * figure 13 * <br> ----- | 1,2,5, 7-10 | |
| | | | **TECHNICAL FIELDS SEARCHED (Int.Cl.7)** <br> H04B <br> H04J |

The present search report has been drawn up for all claims

| Place of search | Date of completion of the search | Examiner |
|---|---|---|
| THE HAGUE | 11 December 2003 | Hadziefendic, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 03 36 0085

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2003

| Patent document cited in search report | | Publication date | Patent family member(s) | | Publication date |
|---|---|---|---|---|---|
| CA 2298340 | A | 09-08-2001 | CA | 2298340 A1 | 09-08-2001 |
| WO 0076102 | A | 14-12-2000 | AU | 4701600 A | 28-12-2000 |
| | | | BR | 0006171 A | 05-02-2002 |
| | | | CA | 2338027 A1 | 14-12-2000 |
| | | | EP | 1097536 A1 | 09-05-2001 |
| | | | JP | 2003501945 T | 14-01-2003 |
| | | | WO | 0076102 A1 | 14-12-2000 |

EPO FORM P0459

For more details about this annex : see Official Journal of the European Patent Office, No. 12/82